(19) Europäisches Patentamt
European Patent Office
Office européen des brevets

(11) **EP 2 022 207 B1**

(12) **FASCICULE DE BREVET EUROPEEN**

(45) Date de publication et mention
de la délivrance du brevet:
**10.10.2018 Bulletin 2018/41**

(51) Int Cl.:
**H04L 9/08** *(2006.01)*     **H04L 9/30** *(2006.01)*
**H04N 7/167** *(2011.01)*

(21) Numéro de dépôt: **07765995.1**

(22) Date de dépôt: **04.05.2007**

(86) Numéro de dépôt international:
**PCT/FR2007/051214**

(87) Numéro de publication internationale:
**WO 2007/138204 (06.12.2007 Gazette 2007/49)**

(54) **PROCÉDÉ CRYPTOGRAPHIQUE À CHIFFREMENT ET RÉVOCATION INTÉGRÉS, SYSTÈME, DISPOSITIF ET PROGRAMMES POUR LA MISE EN OEUVRE DU PROCÉDÉ**

KRYPTOGRAFISCHES VERFAHREN MIT INTEGRIERTER VERSCHLÜSSELUNG UND AUFHEBUNG, SYSTEM, VERFAHREN UND PROGRAMME ZUR IMPLEMENTIERUNG DIESES VERFAHRENS

CRYPTOGRAPHIC METHOD WITH INTEGRATED ENCRYPTION AND REVOCATION, SYSTEM, DEVICE AND PROGRAMS FOR IMPLEMENTING THIS METHOD

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **31.05.2006 FR 0604853**

(43) Date de publication de la demande:
**11.02.2009 Bulletin 2009/07**

(73) Titulaire: **Orange**
**75015 Paris (FR)**

(72) Inventeur: **DELERABLEE, Cécile**
**14000 Caen (FR)**

(74) Mandataire: **Cabinet Plasseraud**
**66, rue de la Chaussée d'Antin**
**75440 Paris Cedex 09 (FR)**

(56) Documents cités:
• **WEN-GUEY TZENG ET AL: "A public-key traitor tracing scheme with revocation using dynamic shares" PUBLIC KEY CRYTOGRAPHY. 4TH INTERNATIONAL WORKSHOP ON PRACTICE AND THEORY IN PUBLIC KEY CRYPTOSYSTEMS, PKC 2001. PROCEEDINGS (LECTURE NOTES IN COMPUTER SCIENCE VOL.1992) SPRINGER-VERLAG BERLIN, GERMANY, 2001, pages 207-224, XP002416529 ISBN: 3-540-41658-7**
• **TO V D ET AL ASSOCIATION FOR COMPUTING MACHINERY: "NEW TRAITOR TRACING SCHEMES USING BILINEAR MAP" PROCEEDINGS OF THE 3RD. ACM WORKSHOP ON DIGITAL RIGHTS MANAGEMENT. DRM 2003. WASHINGTON, DC, OCT. 27, 2003, PROCEEDINGS OF THE ACM WORKSHOP ON DIGITAL RIGHTS MANAGEMENT. (DRM), NEW YORK, NY : ACM, US, 27 octobre 2003 (2003-10-27), pages 67-76, XP001238176 ISBN: 1-58113-786-9**
• **NAOR M ET AL: "Efficient Trace and Revoke Schemes" LECTURE NOTES IN COMPUTER SCIENCE, SPRINGER VERLAG, BERLIN, DE, vol. 1962, février 2000 (2000-02), pages 1-20, XP002326817 ISSN: 0302-9743**

## Description

La présente invention concerne les techniques cryptographiques utilisées notamment pour sécuriser la diffusion de contenus.

Elle s'applique en particulier au cas où une entité (fournisseur) veut diffuser un contenu sur un canal public, non sécurisé, de telle sorte que seuls des utilisateurs légitimes soient capables de lire ce contenu. Les utilisateurs légitimes sont par exemple ceux qui ont payé un droit d'accès. Le fournisseur désire que le contenu reste confidentiel auprès des utilisateurs illégitimes, ce qui requiert l'utilisation d'un schéma de chiffrement particulier admettant, pour une même clé de chiffrement, plusieurs clés de déchiffrement différentes mais équivalentes. Chaque clé est initialement inscrite dans la mémoire d'un dispositif de déchiffrement tel qu'un décodeur remis à chaque utilisateur légitime.

Dans ce contexte, il est souhaitable d'empêcher ou de dissuader la fabrication de décodeurs illégitimes (pirates), ainsi que la diffusion de clés illégitimes, sur le réseau Internet par exemple. Lorsqu'on met la main sur une telle clé ou un tel décodeur illégitime, il est utile de disposer d'un moyen permettant de déterminer l'identité d'au moins un utilisateur légitime (traître) ayant contribué à sa mise au point. Cette capacité est appelée traçabilité.

Une autre opération utile dans ce contexte d'application de la cryptographie est celle consistant à révoquer les clés de déchiffrement de certains utilisateurs. Elle permet au fournisseur de désactiver certaines clés de déchiffrement de son choix. Une clé désactivée (ou révoquée) ne peut servir à déchiffrer de manière correcte un contenu chiffré postérieurement à la révocation.

Dans une application typique, le fournisseur ou diffuseur chiffre le contenu à l'aide une clé de session symétrique K de relativement petite taille, puis diffuse ce contenu chiffré accompagné d'un cryptogramme transportant une version chiffrée de la clé de session K. Chaque utilisateur utilise ensuite sa clé de déchiffrement propre pour récupérer la clé de session K, puis utilise cette clé K pour déchiffrer le contenu diffusé. La clé de session K est renouvelée à intervalles de temps réguliers, par exemple de l'ordre de quelques secondes, de manière que sa publication en temps réel soit trop contraignante pour les pirates. Toute la difficulté technique réside donc dans la conception d'une méthode sûre (schéma de chiffrement) pour chiffrer la clé de session K, admettant de multiples clés de déchiffrement équivalentes.

Les méthodes connues pour répondre à ce besoin présentent un certain nombre de limitations. En particulier, la procédure de chiffrement requiert généralement la connaissance préalable du groupe des utilisateurs légitimes, ce qui en complique beaucoup la gestion dans les applications où les utilisateurs légitimes peuvent être très nombreux.

Un inconvénient particulièrement sensible est que la taille du cryptogramme transportant la clé de session croît avec le nombre d'utilisateurs légitimes. Si n désigne le nombre d'utilisateurs légitimes, la plupart des solutions connues produisent un cryptogramme de taille proportionnelle à n. La meilleure solution connue, d'après l'article Cryptology ePrint "Fully Collusion Résistant Traitor Tracing With Short Ciphertexts and Private Keys" de D. Boneh, A. Sahai et B. Waters, disponible sur Internet (http://eprint.iacr.org/2006/045.pdf), impose encore un cryptogramme de taille proportionnelle à $\sqrt{n}$.

Certains schémas de chiffrement ne sont que partiellement traçables, en ce sens que l'analyse d'un décodeur pirate ou d'une clé illégitime ne permettra de déterminer l'un des traîtres à l'origine de sa conception que si le nombre de traîtres est inférieur à un nombre seuil plus petit que n. Dans ce cas, ces schémas sont d'autant plus inefficaces (en termes de taille du cryptogramme et/ou de taille des clés de déchiffrement) que le seuil k est élevé.

D'autres schémas comme dans l'article "New Traitor Tracing Schemes Using Bilinear Map", de To, Safavi-Naini et Zhang (DRM'03) ne sont pas résistants à certaines attaques, qui les rendent non traçables.

Dans certains schémas de chiffrement, la taille des clés de déchiffrement est très importante, ce qui rend ces solutions inutilisables en pratique, particulièrement dans des environnements embarqués, tels que par exemple des téléphones mobiles, qui n'ont que de faibles capacités de mémoire et/ou de calcul.

La plupart des schémas existants ne sont pas compatibles avec le modèle de boîte noire ("Black Box"). Dans ce modèle, la fonctionnalité de traçabilité s'exerçant sur un décodeur pirate ne requiert pas le désassemblage logique ou physique du décodeur, mais peut au contraire déterminer un traître à partir de simples exécutions du décodeur. Ainsi, ce modèle est particulièrement pertinent lorsque le décodeur pirate est un programme exécutable partiellement ou totalement obfusqué pour dissimuler la clé de déchiffrement qu'il utilise.

Certains schémas de chiffrement ne permettent pas la révocation de clés, ce qui oblige le diffuseur à renouveler toutes les clés de déchiffrement auprès des utilisateurs légitimes à intervalles de temps réguliers.

D'autres schémas (comme dans "A public-key traitor tracing scheme with revocation using dynamic shares" de Wen-Guey Tzeng et Zhi-Jia Tzeng, PKC 2001) permettent la révocation de clés, mais prévoient la diffusion des clés de déchiffrement à révoquer, ce qui rend la révocation permanente. Or, pour des applications comme la diffusion de chaînes de télévision payante, il peut être nécessaire de révoquer des clés de déchiffrement uniquement pour la diffusion de certains programmes. Il est donc indispensable que cette révocation ne révèle pas les clés de déchiffrement à révoquer, pour qu'elles puissent être à nouveau fonctionnelles pour la diffusion d'autres programmes par exemple.

Certains schémas comme dans "Revocation and Tracing Schemes for Stateless Receivers" de Naor et al (Crypto 2001), prévoient que les clés de déchiffrement soient de taille non constante, dépendant du nombre total d'utilisateurs, et ayant certaines parties en commun les unes avec les autres. De ce fait, l'espace mémoire nécessaire du côté des récepteurs doit être prévu assez grand.

En ce qui concerne la diffusion de contenu sur téléphones mobiles (applications dites de mobile TV), les limitations en termes d'espace mémoire et de temps de calcul sont telles qu'il n'existe actuellement aucune solution traçable, même partiellement, ou révocable. La technique actuelle affecte la même clé de déchiffrement à tous les utilisateurs, ce qui n'est pas sécurisant pour les fournisseurs puisqu'un utilisateur-traître parvenant à connaître sa clé, et qui par exemple la diffuse sur Internet, ne peut pas être identifié.

Il existe donc un besoin pour un procédé de chiffrement/déchiffrement qui apporte à la fois traçabilité et révocabilité, tout en minimisant les coûts du côté du diffuseur de contenu et des utilisateurs.

L'invention propose un procédé cryptographique tel qu'énoncé dans la revendication 1.

La révocation ne nécessite pas la diffusion des clés de déchiffrement à révoquer, mais d'une partie des clés seulement, ce qui rend cette opération réversible.

Le procédé procure un schéma de chiffrement efficace, résistant aux coalitions maximales. Il admet un grand nombre clés de déchiffrement traçables et révocables. En outre, les tailles du cryptogramme et des clés peuvent être constantes et indépendantes du nombre d'utilisateurs.

La procédure de chiffrement est rendue indépendante des clés mises à disposition des utilisateurs légitimes, ce qui allège fortement le travail de l'entité qui diffuse le contenu.

De façon remarquable, la taille du cryptogramme peut être rendue constante et indépendante du nombre d'utilisateurs n. Les clés employées peuvent en outre être très petites et de taille constante (indépendante du nombre d'utilisateurs, ou de la taille d'une coalition "autorisée"). Cette propriété se prête bien à une implantation logicielle, par exemple sur des cartes à puce ou des téléphones mobiles.

La procédure de chiffrement est rendue indépendante des clés mises à disposition des utilisateurs légitimes, ce qui allège fortement le travail de l'entité qui diffuse le contenu.

De façon remarquable, la taille du cryptogramme peut être rendue constante et indépendante du nombre d'utilisateurs n. Les clés employées peuvent en outre être très petites et de taille constante (indépendante du nombre d'utilisateurs, ou de la taille d'une coalition "autorisée"). Cette propriété se prête bien à une implantation logicielle, par exemple sur des cartes à puce ou des téléphones mobiles.

L'invention permet le traçage dit en boîte noire ("black box"), c'est-à-dire ne nécessitant en aucune façon le désassemblage matériel du décodeur pirate ou le désassemblage logiciel du programme qu'il contient.

Le procédé offre en outre une possibilité de révocation de clés. Si par exemple un utilisateur a mal agi (détecté comme pirate) ou si son abonnement n'est plus valable, sa clé peut être révoquée, de telle sorte que cet utilisateur (et les éventuels décodeurs pirates issus de celui-ci) ne puisse plus déchiffrer le contenu ultérieurement diffusé.

Dans un mode de réalisation, la récupération des données à transmettre au niveau d'une entité réceptrice comporte une opération de déchiffrement du cryptogramme, qui est empêchée lorsque la clé de déchiffrement de cette entité réceptrice est révoquée dans une opération de chiffrement, ce qui modifie le comportement de cette entité parce qu'elle n'est plus capable de restituer les données effectivement envoyées. Cette modification de comportement est utilisée dans la procédure de traçage, dans laquelle un dispositif de traçage contrôlé par le diffuseur est mis en relation avec un décodeur suspect et révoque successivement les clés des utilisateurs soupçonnés, ou au besoin de la totalité des utilisateurs.

Après une opération de révocation, une opération de déchiffrement peut en outre inclure, au niveau d'une entité réceptrice autre que l'entité dont la clé de déchiffrement est révoquée, une mise à jour d'au moins un élément de la clé de déchiffrement cette entité.

Dans un mode de réalisation avantageux, toutes les N opérations de chiffrement, l'opération de chiffrement inclut une opération de révocation de clé de déchiffrement, N étant un entier égal ou supérieur à 1. Un tel mode de réalisation permet une résistance aux décodeurs dits "stateful", c'est-à-dire capables de se rendre compte qu'ils font l'objet d'une procédure de traçage, du fait que la procédure de traçage n'est pas distinguable de la procédure "normale" de chiffrement par un décodeur. Le traçage est toujours possible, car un décodeur ne pourra pas se rendre compte qu'il est en train d'être testé par une autorité tant que sa propre clé (ou l'une des clés ayant servi à sa confection) n'aura pas été révoquée, cette révocation entraînant une modification de son comportement, permettant de détecter le traître.

Le cryptogramme comporte avantageusement des parties représentatives:

- de l'élément $C_1 = h_1^{1/(\gamma+s)}$ du groupe $G_1$, où s est la valeur affectée à un élément variable, prise comme un entier compris entre 1 et p-1;
- de la valeur $C_2 = s$ dudit élément variable;
- de l'élément $C_3 = w^k$ du groupe $G_2$, où k désigne un nombre entier compris entre 1 et p-1;
- de l'élément $C_4 = h_2^{k/(\gamma+s)}$ du groupe $G_2$, $h_2$ étant un élément générateur du groupe $G_2$ tel que $g_2 = h_2^{\alpha}$; et
- d'une valeur $C_5$ dérivée des données à transmettre (K) et d'une valeur de masquage (R) obtenue en soumettant les éléments $g_1$ et $C_4$ des groupes $G_1$ et $G_2$ à une application bilinéaire.

Au moins une opération de révocation inclut alors, après le calcul de l'élément $C_1$ avec la valeur s dudit élément variable égale à l'index x' de la clé de déchiffrement révoquée, le remplacement de l'élément $h_1$ du groupe $G_1$ par $h_1^{1/(\gamma+x')}$ et, après le calcul de l'élément $C_4$ avec la valeur s dudit élément variable égale à l'index x' de la clé de déchiffrement révoquée, le remplacement de l'élément $h_2$ du groupe $G_2$ par $h_2^{1/(\gamma+x')}$ pour le calcul du cryptogramme dans une prochaine opération de chiffrement. Ainsi, le cryptogramme obtenu contient une partie de la clé de déchiffrement à révoquer (B, x), et non la totalité (A, B, x), ce qui rend la révocation réversible. L'opération de déchiffrement du cryptogramme pour récupérer les données à transmettre au niveau d'une entité réceptrice ayant une clé de déchiffrement {A, B, x}, inclut le calcul d'un élément $Y = (C_1/B)^{1/(x-C_2)}$ du groupe $G_1$, le calcul d'une première valeur en soumettant les éléments Y et w des groupes $G_1$ et $G_2$ à l'application bilinéaire, le calcul d'une deuxième valeur en soumettant les éléments $A^X$ et $C_4$ des groupes $G_1$ et $G_2$ à l'application bilinéaire, le calcul d'une troisième valeur, représentative de la valeur de masquage, égale au produit desdites première et deuxième valeurs, et la récupération des données à transmettre à partir de la valeur $C_5$ et de ladite troisième valeur.

Le nombre entier k peut être tiré aléatoirement entre 1 et p-1 à chaque opération de chiffrement. Une autre possibilité est de prendre k constant, notamment k = 1 auquel cas l'élément $C_3$ = w n'a pas besoin d'être transmis.

Dans une réalisation simplifiée, le groupe $G_2$ est identique au groupe $G_1$ et les éléments $h_1$ et $h_2$ sont égaux.

Le procédé selon l'invention permet également de procéder au chiffrement à l'aide d'une clé publique fournie par la première entité. Le calcul du cryptogramme dans l'opération de chiffrement comporte alors une première partie exécutée par la première entité pour produire une clé publique de chiffrement à partir d'au moins ladite valeur de l'élément variable et la clé de chiffrement secrète, et au moins une occurrence d'une deuxième partie exécutée par une autre entité pour produire le cryptogramme à partir des données à transmettre, de la clé publique de chiffrement et d'au moins un nombre tiré aléatoirement à chaque occurrence.

Un autre aspect de la présente invention se rapporte à un système de chiffrement tel qu'énoncé dans la revendication 9.

Un autre aspect de la présente invention, défini dans la revendication 11, se rapporte à un programme d'ordinateur pour un système de chiffrement.

Un autre aspect de la présente invention se rapporte à un dispositif de traçage pour examiner un décodeur pirate, tel qu'énoncé dans la revendication 12.

Un autre aspect encore de la présente invention se rapporte à un dispositif de déchiffrement tel qu'énoncé dans la revendication 13.

Ce dispositif peut notamment être adapté pour déchiffrer un cryptogramme produit par un système de chiffrement selon l'invention et comportant les éléments $C_1$, $C_2$, $C_3$, $C_4$ et $C_5$ ci-dessus énumérés, au moyen du calcul d'un élément $Y = (C_1/B)^{1/(x-C_2)}$ du groupe $G_1$, d'une première valeur en soumettant les éléments Y et $w^k = C_3$ des groupes $G_1$ et $G_2$ à l'application bilinéaire, d'une deuxième valeur en soumettant les éléments $A^X$ et $C_4$ des groupes $G_1$ et $G_2$ à l'application bilinéaire, et d'une troisième valeur égale au produit desdites première et deuxième valeurs, où {A, B, x} est une clé de déchiffrement allouée au dispositif et stockée dans une mémoire du dispositif. Les données à transmettre sont récupérées par le dispositif à partir de l'élément $C_5$ et de ladite troisième valeur. Si on est dans le cas où k = 1 lors du chiffrement, l'élément $C_3$ = w n'est pas nécessairement inclus dans le cryptogramme reçu. L'invention propose aussi un programme d'ordinateur adapté à une version logicielle d'un tel dispositif de déchiffrement.

D'autres particularités et avantages de la présente invention apparaîtront dans la description ci-après d'exemples de réalisation non limitatifs, en référence aux dessins annexés, dans lesquels :

- la figure 1 est un schéma synoptique d'un exemple de système de chiffrement selon l'invention;
- la figure 2 est un schéma synoptique d'un exemple de dispositif de déchiffrement adapté au système de chiffrement de la figure 1;
- les figures 3 et 4 sont des organigrammes d'opérations de chiffrement et de déchiffrement respectivement utilisables dans un système tel que celui de la figure 1 et dans un dispositif tel que celui de la figure 2;
- les figures 5 et 6 sont des organigrammes de variantes simplifiées d'opérations de chiffrement et de déchiffrement;
- les figures 7A et 7B sont des schémas synoptiques de première et deuxième entités formant un autre mode de réalisation d'un système selon l'invention;
- les figures 8A et 8B sont des organigrammes d'un exemple de procédure de chiffrement selon l'invention, répartie entre les première et deuxième entités des figures 7A et 7B.

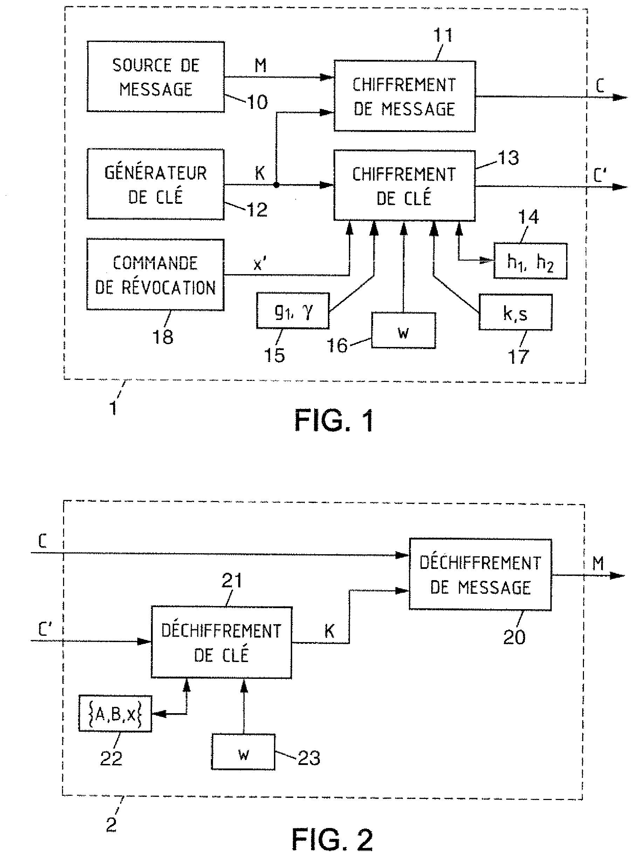

L'invention est décrite ci-après dans son application non limitative à la diffusion de contenus chiffrés. L'entité 1 représentée sur la figure 1 est, dans cette application, contrôlée par un fournisseur ou diffuseur de contenus, et elle comporte une source 10 de messages M consistant par exemple en des contenus audio et/ou vidéo codés. Les messages M sont chiffrés par un module 11 à l'aide d'une clé de chiffrement symétrique K appartenant à un ensemble E et produite par un générateur aléatoire 12. On note C le cryptogramme résultant du chiffrement d'un message M au moyen de la clé K.

La clé de chiffrement symétrique K est elle-même chiffrée en un cryptogramme C' par un module de calcul 13 en appliquant un procédé conforme à l'invention.

Le procédé selon l'invention est par exemple applicable au contrôle d'accès à des chaînes de télévision payantes. Le contenu est alors déchiffrable en permanence par les décodeurs légitimes (non révoqués), et la clé contenue dans un décodeur est mise à jour au fur et à mesure que des clés sont révoquées. En cas de déconnexion prolongée, une phase de synchronisation peut être prévue si nécessaire, durant laquelle la clé du décodeur sera mise à jour (en fonction des changements de paramètres ayant eu lieu entre la déconnexion et la reconnexion).

Il est également applicable au domaine de la vidéo à la demande (VOD, "video on demand"), dans lequel les utilisateurs achètent un droit temporaire de déchiffrer un contenu chiffré diffusé. Dans ce cas, l'utilisateur se connecte afin d'obtenir une clé de déchiffrement (ou une mise à jour d'une clé existante), qui sera révoquée à la fin de la période prévue par l'achat du service. Un canal retour sera alors utilisé, juste à l'initialisation, pour authentifier le client et/ou pour payer le service. Durant la période de déchiffrement autorisé, la clé de déchiffrement pourra être mise à jour en fonction de l'évolution des paramètres, due à d'éventuelles révocations.

Dans l'exemple non limitatif considéré ici, le chiffrement utilise un schéma reposant sur l'environnement mathématique suivant. Deux groupes cycliques $G_1$ et $G_2$ sont définis, chacun d'ordre p, où p et un nombre premier, ayant typiquement une représentation en base 2 de plus de cent bits. Une application bilinéaire e de $G_1 \times G_2$ dans un autre groupe cyclique $G_T$ est en outre définie. Un exemple possible pour cette application bilinéaire e est le couplage de Tate. On note $h_1$ et $h_2$ deux éléments générateurs respectifs des groupes $G_1$ et $G_2$, stockés dans un mémoire 14 de l'entité 1. Cette mémoire 14 est accessible en lecture et en écriture par le module de chiffrement 13. Il n'est pas indispensable que ses accès soient protégés.

Pour le masquage de la clé K à transmettre, un mécanisme (public) de dérivation de clé est utilisé, consistant en une application D de $E \times G_T$ dans E admettant une application inverse $D^{-1}$ de $E \times G_T$ dans E. Si R désigne une valeur de masquage calculée dans le groupe $G_T$, le cryptogramme C' inclura une partie représentative d'une valeur $C_5 = D(K, R)$, à partir de laquelle un décodeur ayant reconstitué la valeur de masquage R pourra récupérer la clé $K = D^{-1}(C_5, R)$. Un exemple possible consiste à prendre $D(K, R) = K \oplus H(R)$, où H est une fonction de hachage à valeurs dans E, c'est-à-dire du même nombre de bits que les clés K, et $\oplus$ désigne l'opération OU EXCLUSIF bit à bit. Cette application D est égale à son inverse $D^{-1}$.

La clé secrète du diffuseur est stockée dans une mémoire 15 de l'entité 1, accessible en lecture seulement et de manière protégée. Elle comporte un élément $g_1$ du groupe $G_1$ et un nombre entier $\gamma$ compris entre 1 et p-1. On note $\alpha$ le nombre entier compris entre 1 et p-1 tel que $g_1 = h_1^{\alpha}$. Cette clé secrète est associée à une clé publique w, stockée dans une mémoire 16, consistant en un élément du groupe $G_2$ tel que $w = g_2^{\gamma}$, avec $g_2 = h_2^{\alpha}$.

La clé de déchiffrement fournie par le diffuseur à un décodeur est choisie comme une solution à un problème difficile tel que par exemple le problème q-SDH ("q-Strong Diffie-Hellman"). Une telle clé {A, B, x} comporte un index entier x compris entre 1 et p-1 et deux éléments A, B du groupe $G_1$ définis par $A = g_1^{1/(\gamma+x)}$ et $B = h_1^{1/(\gamma+x)}$. Pour un décodeur donné, les paramètres A et x de la clé de déchiffrement sont invariables, tandis que l'élément B (comme $h_1$) change lorsque des révocations de clé ont lieu, comme on le verra plus loin. Les index x des clés en circulation sont connues du diffuseur.

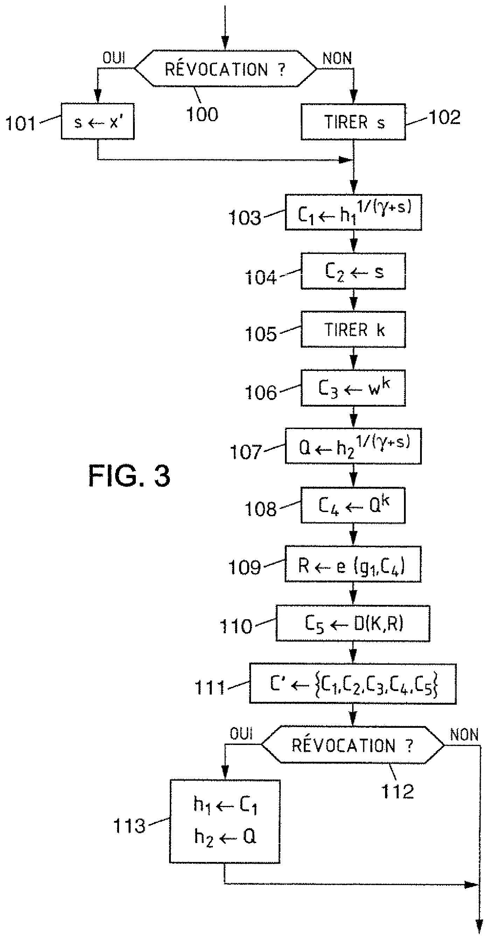

Dans la réalisation considérée en référence à la figure 3, le chiffrement d'une clé de session K par l'entité 1 fait intervenir deux nombres entiers k et s pris aléatoirement entre 1 et p-1, produits par un générateur de nombres aléatoires 17.

Lorsque le chiffrement s'accompagne de la révocation d'une des clés de déchiffrement {A', B', x'}, le nombre s n'est pas tiré au hasard mais pris égal à l'index x' de la clé révoquée. Dans l'architecture illustrée par la figure 1, le module 18 fournit les commandes de révocation en indiquant l'index x' de la clé à révoquer.

La figure 3 montre les calculs et traitements logiques effectués par le module 13 pour le chiffrement d'une clé de session K. Si le module 18 a commandé une révocation de clé d'index x' (test 100), la valeur de l'index entier x' est affectée à l'entier s à l'étape 101. Sinon, la valeur de s est tirée au hasard à l'étape 102.

Le module 13 calcule alors l'élément $C_1 = h_1^{1/(\gamma+s)}$ du groupe $G_1$ à l'étape 103, et il affecte la valeur de l'entier s à l'élément $C_2$ à l'étape 104. Le nombre k est tiré au hasard entre 1 et p-1 à l'étape 105, et le module 13 calcule l'élément $C_3 = w^k$ du groupe $G_2$ à l'étape 106. Le module 13 obtient également l'élément $C_4 = h_2^{k/(\gamma+s)}$ du groupe $G_2$, par exemple en calculant $Q = h_2^{1/(\gamma+s)}$ à l'étape 107 puis $C_4 = Q^k$ à l'étape 108. La valeur de masquage R peut alors être calculée à l'étape 109, selon la formule: $R = e(g_1, C_4)$.

Après avoir obtenu la valeur $C_5 = D(K, R)$ à l'étape 110, le module 13 compose le cryptogramme C' = {$C_1$, $C_2$, $C_3$, $C_4$, $C_5$} à l'étape 111 pour qu'il soit diffusé conjointement au cryptogramme C. Ceci termine l'opération de chiffrement si elle ne s'accompagne d'aucune révocation de clé de déchiffrement.

Si en revanche le module 18 fait révoquer une clé d'index x' (test 112), l'entité 1 procède à une mise à jour des valeurs des éléments générateurs $h_1$ et $h_2$ des groupes $G_1$ et $G_2$, en remplaçant $h_1$ par $C_1 = h_1^{1/(\gamma+x')}$ et $h_2$ par $Q = h_2^{1/(\gamma+x')}$. On note que cette mise à jour n'affecte pas les valeurs $g_1$ et $\gamma$ constituant la clé secrète du diffuseur.

En référence à la figure 2, une entité réceptrice (décodeur) 2 comporte un module 20 pour déchiffrer les cryptogrammes C' et restituer les messages M, à l'aide de la clé symétrique K. Celle-ci est récupérée par un module de déchiffrement de clé 21 recevant le cryptogramme C' et coopérant avec une mémoire 22 où est stockée la clé de déchiffrement $\{A, B, x\}$ allouée au décodeur et éventuellement avec une mémoire 23 où est stockée la clé publique w du diffuseur.

La mémoire 22 contenant la clé $\{A, B, x\}$ appartient à une partie sécurisée du décodeur, par exemple à une carte à puce, de même que le module de calcul 21, ce qui interdit l'accès aux paramètres confidentiels. Le module 20 de déchiffrement du contenu à l'aide de K peut quant à lui se trouver dans une partie autre du décodeur 2.

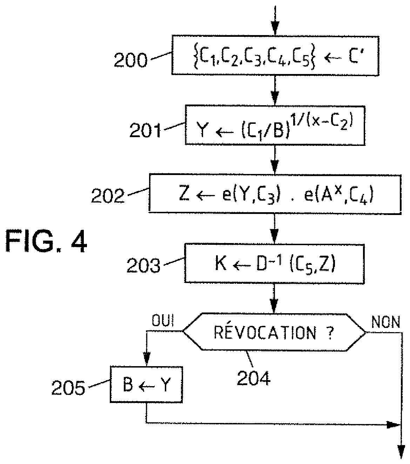

Le déchiffrement du cryptogramme C' par le module 21 du décodeur 2 peut être réalisé selon la procédure illustrée par la figure 4 lorsque ce cryptogramme C' a été construit conformément à la figure 3. Après récupération des paramètres $C_1$-$C_5$ du cryptogramme C' à l'étape 200, le module de déchiffrement 21 calcule l'élément $Y = (C_1/B)^{1/(x-C_2)}$ du groupe $G_1$ à l'étape 201. On voit que ce calcul est impossible du fait d'une indétermination lorsque le cryptogramme C' a été construit dans une opération de révocation de la clé $\{A, B, x\}$ du décodeur considéré ($C_2 = x$).

A l'étape 202, le module 21 utilise l'application bilinéaire e pour calculer deux valeurs $Z_1 = e(Y, C_3)$ et $Z_2 = e(A^x, C_4)$, qui sont ensuite multipliées entre elles pour produire une autre valeur $Z = Z_1.Z_2$ du groupe $G_T$. On peut vérifier que, si la clé de déchiffrement $\{A, B, x\}$ du décodeur 2 n'a pas été révoquée, cette valeur Z est égale à la valeur de masquage R intervenue dans l'opération de chiffrement. Le décodeur peut alors récupérer la clé de session $K = D^{-1}(C_5, Z)$ à l'étape 203.

Si une clé de déchiffrement d'index x' a été révoquée lors de la formation du cryptogramme reçu C' (test 204), il reste au décodeur 2 à mettre à jour le paramètre B de sa clé de déchiffrement, ce qui est réalisé par le module 21 à l'étape 205 en substituant à B la valeur $Y = (C_1/B)^{1/(x-C_2)}$ obtenue à l'étape 201. On peut vérifier que compte tenu de la mise à jour de $h_1$ effectuée par la première entité 1 à l'étape 113, la nouvelle valeur de B reste bien égale à $h_1^{1/(\gamma+x)}$. On peut aussi vérifier que le décodeur dont la clé $\{A', B', x'\}$ a été révoquée n'est pas en mesure de procéder à la mise à jour 205.

Pour signaler aux décodeurs légitimes qu'une révocation de clé de déchiffrement est intégrée au chiffrement courant, et donc qu'une mise à jour de B doit intervenir, l'entité 1 peut par exemple insérer dans le cryptogramme C' (voire dans un en-tête du message M) un bit de signalisation spécifique. La valeur de ce bit indique si la clé de déchiffrement d'un décodeur est en train d'être révoquée (1) ou non (0), et est examinée à l'étape 204 par les décodeurs. D'autres moyens de signalisation des révocations sont également possibles.

D'ailleurs, une telle signalisation n'est pas toujours nécessaire. Dans un mode de réalisation du procédé, une mise à jour des paramètres $h_1$, $h_2$ est effectuée par le diffuseur dans chaque opération de chiffrement, ce qui revient à dire que chaque opération de chiffrement inclut une opération de révocation de clé de déchiffrement, qu'il s'agisse ou non d'une clé effectivement allouée à un décodeur. Dans ce cas, le test 112 de la figure 3 est court-circuité et l'étape 113 systématiquement exécutée. Corrélativement, le module de calcul 21 du décodeur court-circuite le test 204 de la figure 4 et exécute systématiquement l'étape 205. Un tel mode de réalisation a pour avantage de ne pas permettre aux décodeurs de détecter que la clé d'un autre décodeur est en train d'être révoquée.

En d'autres termes, un décodeur ne peut pas être "stateful" tant que sa propre clé n'est pas révoquée. Il est à noter que cette propriété fort intéressante ne sera pas toujours utilisée par les diffuseurs si la sécurité selon le modèle "black box" suffit et si une complexité minimale de la procédure de chiffrement/déchiffrement est recherchée.

En variante, le diffuseur peut procéder à une opération de révocation de clé de déchiffrement (allouée ou non à un décodeur) toutes les N opérations de chiffrement, le nombre entier N > 1 étant convenu par avance avec les décodeurs. Les étapes 113 et 205 sont alors exécutées automatiquement toutes les N fois, sans qu'il soit nécessaire de signaler aux décodeurs les opérations de révocation. La variante précédente correspond au cas où N = 1.

Le mode de réalisation illustré par les figures 3 et 4 peut être modifié de diverses manières sans sortir du cadre de l'invention. En particulier, plutôt que de tirer au hasard le nombre entier k, celui-ci peut être pris égal à 1 dans chaque opération de chiffrement. Ceci simplifie certains calculs, et dans ce cas l'élément $C_3 = w$ n'a pas besoin d'être incorporé au cryptogramme C' puisqu'il est déjà connu des décodeurs.

Dans une autre variante, les groupes cycliques $G_1$ et $G_2$ sont confondus, et on prend $h_1 = h_2$ (et donc aussi $g_1 = g_2$).

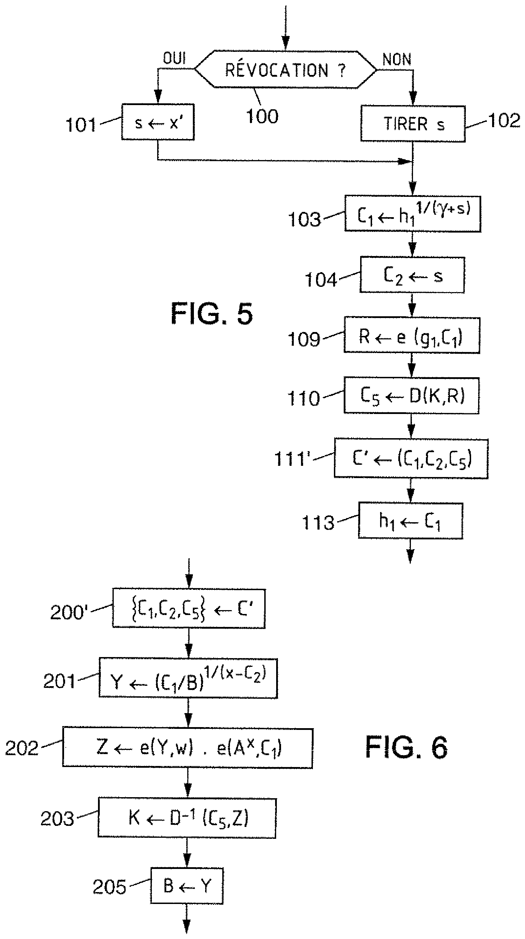

Une réalisation simplifiée avec k = 1, $G_1 = G_2$ et $h_1 = h_2$ est illustrée sur les figures 5 et 6 dans le cas particulier où chaque opération de chiffrement inclut une opération de révocation (N = 1). Les étapes 100-104 et 109-110 de la figure 5 sont identiques à celles de la figure 3, les étapes 105-108 n'étant pas nécessaires dans ce cas (k = 1, $C_3 = w$, $C_4 = Q = C_1$). Il suffit d'inclure les éléments $C_1$, $C_2$ et $C_5$ dans le cryptogramme C' à l'étape 111'. D'autre part, l'étape 113 de mise à jour du paramètre $h_1 = h_2$ est effectuée systématiquement en fin de traitement par le module 13. Les éléments $C_1$, $C_2$ et $C_5$ sont récupérés à l'étape 200' par le module de calcul 21 du décodeur, qui procède ensuite aux étapes 201, 202, 203 et 205 précédemment décrites en référence à la figure 4 (avec $C_3 = w$ et $C_4 = C_1$).

Un dispositif de traçage utilisable pour examiner un décodeur pirate consiste essentiellement en un système de chiffrement analogue à l'entité 1 décrite en référence à la figure 1, qui est mis en communication avec le décodeur pirate, les cryptogrammes C, C' n'étant pas diffusés aux utilisateurs légitimes. Le système de chiffrement du dispositif de traçage délivre au décodeur pirate, à travers l'interface de communication appropriée, des cryptogrammes C' produits dans des opérations de chiffrement successives. Le module 18 commande le module de chiffrement pour que les clés de déchiffrement des décodeurs soupçonnés soient successivement révoquées. La totalité des utilisateurs légitimes, ou certains d'entre eux seulement, peuvent a priori être soupçonnés. En réponse à ces opérations de révocation successives, le décodeur pirate adoptera le comportement régulier (décodage correct des messages M) jusqu'à ce que la clé de déchiffrement à partir de laquelle il a été construit soit révoquée. A ce moment, son incapacité à décoder le contenu M révèlera l'identité x' du traître. Si le décodeur pirate emploie une combinaison de plusieurs clés de décodeurs légitimes, ceux-ci pourront être identifiés successivement par la procédure de traçage.

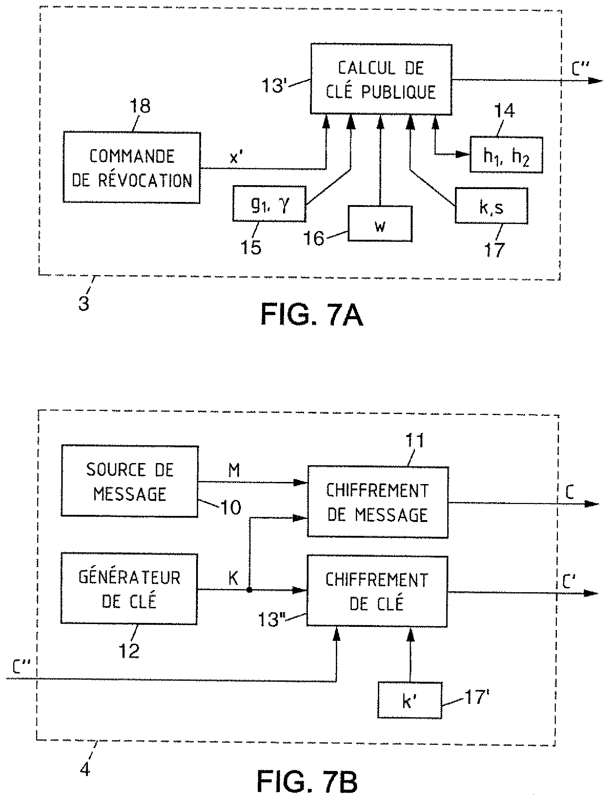

Le procédé cryptographique ci-dessus décrit est compatible avec une architecture à clé de chiffrement publique, telle qu'illustrée par les figures 7A et 7B.

Dans ce cas l'entité 3 qui supervise le contrôle d'accès aux contenus M délivre une clé publique C" qu'une deuxième entité 4 utilise pour le chiffrement proprement dit des clés K.

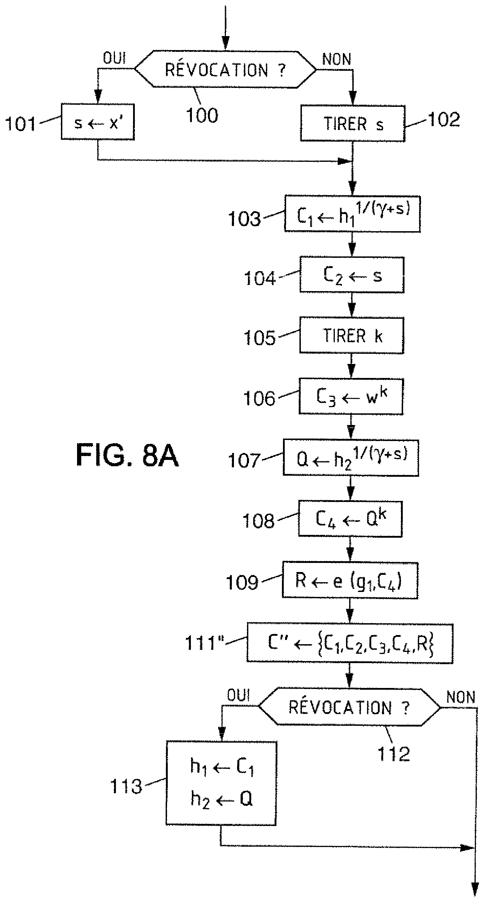

La première entité 3 comporte un module de calcul 13' qui fonctionne de manière semblable au module de calcul 13 de la figure 1 (étapes 100-109 et 112-113 de la figure 8A identiques à celles de la figure 2) mais qui, à l'étape 111", remplace la valeur $C_5$ par la valeur de masquage R = $e(g_1, h_2^{k/(\gamma+s)})$ pour former la clé publique C" = {$C_1$, $C_2$, $C_3$, $C_4$, R}

La deuxième entité 4 comporte la source de messages 10, le générateur de clés de session 12, le module de chiffrement des messages 11 et un module de chiffrement de clés modifié 13" fonctionnant avec un générateur 17' de nombres aléatoires k' pour produire le cryptogramme C' adjoint au cryptogramme C produit par le module 11.

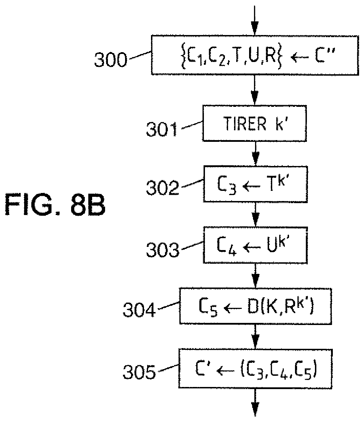

Le fonctionnement du module 13" est illustré par la figure 8B. A l'étape 300, il récupère les cinq composantes de la clé publique C" fournie par l'entité 3, notées $C_1$, $C_2$, T (= $C_3$ sur la figure 8A), U (= $C_4$ sur la figure 8A) et R. Un nombre aléatoire k' est tiré entre 1 et p-1 à l'étape 301 pour le calcul de $C_3$ = $T^{k'}$ à l'étape 302 et de $C_4$ = $U^{k'}$ à l'étape 303. A l'étape 304, une nouvelle valeur de masquage $R^{k'}$ est calculée puis combinée à la clé de session K fournie par le générateur 12 au moyen de l'application bilinéaire pour former la composante $C_5$ = D(R, $R^{k'}$). Le cryptogramme C' peut alors être assemblé à l'étape 305 afin de rendre les composantes $C_1$-$C_5$ disponibles aux décodeurs 2. Comme le montre la figure 8B, le cryptogramme C' délivré par la deuxième entité 4 peut dans ce cas n'inclure que les composantes $C_3$-$C_5$ étant donné que les composantes $C_1$ et $C_2$ font déjà partie de la clé publique C" que les décodeurs ont pu recevoir par ailleurs.

Dans l'architecture à clé publique, les décodeurs 2 peuvent être les mêmes que ceux décrits précédemment puisque les composantes $C_1$-$C_5$ sont les mêmes que celles calculées par l'entité 1 de la figure 1 (si on prend k.k' *modulo* p comme valeur de k sur la figure 3).

L'architecture à clé publique est compatible avec les différentes variantes du procédé qui ont été évoquées plus haut, un exposant k' étant simplement utile au fonctionnement de l'entité 4 qui procède au chiffrement des clés K.

D'autres modes de réalisation du procédé selon l'invention permettent au besoin de révoquer simultanément les clés de déchiffrement de plusieurs utilisateurs. Par exemple, si plusieurs éléments variables $s_1$, ...$s_m$ du même type que s dans l'algorithme décrit en référence à la figure 3, 5 ou 8A sont intégrés à la composante $C_2$ du cryptogramme et combinés à $\gamma$ pour générer les composantes $C_1$ et $C_4$ (m > 1), le gestionnaire du système pourra révoquer jusqu'à m clés simultanément en affectant à l'un des éléments $s_i$ l'index x' d'une des clés à révoquer (1 ≤ i ≤ m). Une possibilité est de remplacer $C_1$ par $h_1^{1/[(\gamma+s_1)\times(\gamma+s_2)\times...\times(\gamma+s_m)]}$ ou par le m-uplet des $h_1^{1/(\gamma+s_i)}$ et $C_4$ par $h_2^{k/[(\gamma+s_1)\times(\gamma+s_2)\times...\times(\gamma+s_m)]}$ ou par le m-uplet des $h_2^{k/(\gamma+s_i)}$). Un décodeur devra alors calculer la valeur $B^{1/[(\gamma+s_1)\times(\gamma+s_2)\times...\times(\gamma+s_m)]}$ afin de pouvoir déchiffrer un tel cryptogramme.

Dans le cadre notamment d'un tel mode de réalisation, on peut faire en sorte que la mise à jour des paramètres $h_1$ et $h_2$ par l'entité 1, 3 et B par les décodeurs 2 n'intervienne pas lors de chaque opération de révocation de clé de déchiffrement. Tant que le nombre q de clés de déchiffrement révoquées depuis la dernière mise à jour de ces paramètres reste inférieur à m, on peut continuer à chiffrer des données K sans effectuer de nouvelle mise à jour et en conservant la variabilité d'au moins un des éléments $s_i$, en ayant soin de garder les index $x'_1$, ..., $x'_q$ des clés révoquées comme valeurs de q des m éléments $s_1$, ...$s_m$. Chaque décodeur muni de l'une de ces q clés est alors dans l'incapacité de déchiffrer. Lorsqu'une nouvelle mise à jour des paramètres sera finalement réalisée, ces q décodeurs perdront les paramètres nécessaires au déchiffrement et il deviendra à nouveau possible de révoquer des clés supplémentaires. Une telle mise à jour des paramètres peut être effectuée à une fréquence prédéterminée ou à des occasions signalées par l'entité émettrice 1, 3.

Un avantage de ce type de réalisation est de faciliter la gestion des éventuelles déconnexions des décodeurs légitimes. En général, suite à une telle déconnexion, un décodeur 2 doit se resynchroniser en récupérant auprès de l'entité 1, 3 des paramètres permettant de mettre à jour sa clé de déchiffrement. Lors de la reconnexion, si le décodeur 2 constate qu'il ne parvient pas à déchiffrer correctement les cryptogrammes C, C', un échange intervient au cours duquel le décodeur 2 indique à l'entité 1, 3 à quel moment il s'est déconnecté et l'entité 1, 3 lui retourne les composantes $C_1$ et $C_2$ des cryptogrammes C' qui ont été émis lors des mises à jour de paramètres intervenues pendant la période de déconnexion. Le décodeur 2 peut alors effectuer les mises à jour successives qu'il a manquées (calculs 201, 205 de la figure 4 ou 6) et reprendre le déchiffrement des clés et des contenus diffusés. Outre la charge de signalisation, ceci implique que les décodeurs 2 mémorisent les instants auxquels ils se déconnectent et que l'entité 1, 3 conserve en mémoire un historique de certaines composantes des cryptogrammes C' émis lors des mises à jour de paramètres. En réduisant la fréquence de mise à jour des paramètres par rapport à celle des révocations de clés, on réduit la probabilité qu'un décodeur ait besoin de se resynchroniser et on allège donc les échanges requis. En outre, on réduit la quantité d'information qu'il faut conserver en historique au niveau de l'entité 1, 3 pour mener à bien les resynchronisations qui peuvent demeurer.

Les dispositifs représentés sur les figures 1, 2, 7A et 7B peuvent être réalisés au moyen de circuits spécifiques ou de composants logiques programmés de type FPGA ou analogues. Une réalisation courante utilisera cependant des processeurs d'usage général exécutant des programmes selon l'invention, écrits de façon à mettre en oeuvre, par exemple, l'une des procédures précédemment décrites en référence aux figures 2-6, 8A et 8B.

## Revendications

1. Procédé cryptographique, dans lequel une première entité (1; 3) dispose d'une clé de chiffrement secrète ($g_1$, $\gamma$) d'un schéma de chiffrement admettant plusieurs clés de déchiffrement, et plusieurs entités réceptrices (2) disposent de clés de déchiffrement respectives ({A, B, x}), chaque clé de déchiffrement incorporant un index de clé respectif (x), le procédé comprenant une opération de chiffrement comportant les étapes suivantes:

   - affecter une valeur à au moins un élément variable (s); et

   **caractérisé en ce qu'**il comprend les étapes de:

   - calculer un cryptogramme (C') à partir de données à transmettre (K), d'au moins chaque valeur d'élément variable (s), et de la clé de chiffrement secrète, dans lequel le cryptogramme (C') a une taille constante et indépendante du nombre d'entités réceptrices (2), et comprend au moins des parties représentatives:

      • de l'élément $C_1 = h_1^{1/(\gamma+s)}$ du groupe $G_1$, où s est la valeur affectée à un élément variable, prise comme un entier compris entre 1 et p-1 ;
      • de la valeur $C_2 = s$ dudit élément variable;
      • d'une valeur $C_5$ dérivée des données à transmettre (K) et d'une valeur de masquage (R) calculée dans un groupe cyclique (GT)

   le procédé comprenant en outre une opération de révocation d'au moins une clé de déchiffrement intégrée à une opération de chiffrement effectuée en affectant à un élément variable (s) une valeur fonction de l'index de clé (x') de l'une des clés de déchiffrement ({A', B', x'}), certaines au moins des opérations de révocation incluant en outre une mise à jour d'au moins un paramètre (h1, h2) intervenant dans le calcul du cryptogramme (C') pour une prochaine opération de chiffrement,

   dans lequel la clé de chiffrement secrète inclut un élément $g_1$ d'un groupe cyclique $G_1$ d'ordre p et un nombre entier $\gamma$ choisi entre 1 et p-1, où p désigne un nombre premier,

   dans lequel la clé de chiffrement secrète est associée à une clé publique w d'un groupe cyclique $G_2$ d'ordre p, de la forme $w = g_2^{\gamma}$, où $g_2$ est un élément du groupe $G_2$,

   et dans lequel chaque clé de déchiffrement d'index entier x compris entre 1 et p-1 inclut deux éléments $A = g_1^{1/(\gamma+x)}$ et $B = h_1^{1/(\gamma+x)}$ du groupe $G_1$, $h_1$ étant un élément générateur du groupe $G_1$ tel que $g_1 = h_1^{\alpha}$ avec $\alpha$ exposant entier compris entre 1 et p-1.

2. Procédé cryptographique selon la revendication 1, dans lequel, toutes les N opérations de chiffrement, l'opération de chiffrement inclut une opération de révocation de clé de déchiffrement, N étant un entier supérieur ou égal à 1.

3. Procédé cryptographique selon l'une quelconque des revendications précédentes, comprenant en outre une opération de déchiffrement du cryptogramme (C') pour récupérer les données à transmettre (K) au niveau d'une entité réceptrice (2), l'opération de déchiffrement étant empêchée lorsque la clé de déchiffrement ({A', B', x'}) de ladite entité réceptrice est révoquée dans une opération de chiffrement.

4. Procédé cryptographique selon la revendication 3, dans lequel, après une opération de révocation, une opération de déchiffrement inclut en outre une mise à jour d'au moins un élément (B) de la clé de déchiffrement ({A, B, x}) de l'entité réceptrice (2).

5. Procédé cryptographique selon l'une des revendications précédentes, dans lequel le cryptogramme (C') comprend en outre des parties représentatives:

   • de l'élément $C_3 = w^k$ du groupe $G_2$, où k désigne un nombre entier compris entre 1 et p-1 ;
   • de l'élément $C_4 = h_2^{k/(\gamma+s)}$ du groupe $G_2$, $h_2$ étant un élément générateur du groupe $G_2$ tel que $g_2 = h_2^{\alpha}$; et

la valeur de masquage (R) est obtenue en soumettant les éléments $g_1$ et $C_4$ des groupes $G_1$ et $G_2$ à une application bilinéaire,

et dans lequel au moins une opération de révocation inclut, après le calcul de l'élément $C_1$ avec la valeur s dudit élément variable égale à l'index x' de la clé de déchiffrement révoquée, le remplacement de l'élément $h_1$ du groupe $G_1$ par $h_1^{1/(\gamma+x')}$ et, après le calcul de l'élément $C_4$ avec la valeur s dudit élément variable égale à l'index x' de la clé de déchiffrement révoquée, le remplacement de l'élément $h_2$ du groupe $G_2$ par $h_2^{1/(\gamma+x')}$ pour le calcul du cryptogramme dans une prochaine opération de chiffrement.

**6.** Procédé cryptographique selon la revendication 5, comprenant en outre une opération de déchiffrement du cryptogramme (C') pour récupérer les données à transmettre (K) au niveau d'une entité réceptrice (2) ayant une clé de déchiffrement {A, B, x}, l'opération de déchiffrement incluant le calcul d'un élément $Y = (C_1/B)^{1/(x-C_2)}$ du groupe $G_1$, le calcul d'une première valeur en soumettant les éléments Y et $C_3$ des groupes $G_1$ et $G_2$ à l'application bilinéaire, le calcul d'une deuxième valeur en soumettant les éléments $A^X$ et $C_4$ des groupes $G_1$ et $G_2$ à l'application bilinéaire, le calcul d'une troisième valeur, représentative de la valeur de masquage, égale au produit desdites première et deuxième valeurs, et la récupération des données à transmettre (K) à partir de la valeur $C_5$ et de ladite troisième valeur, et dans lequel au moins une opération de déchiffrement inclut en outre, après une opération de révocation, le remplacement de l'élément B de la clé de déchiffrement {A, B, x} de l'entité réceptrice (2) par ledit élément Y calculé au cours de ladite opération de déchiffrement.

**7.** Procédé cryptographique selon l'une quelconque des revendications précédentes, dans lequel le calcul du cryptogramme (C') dans l'opération de chiffrement comporte une première partie exécutée par la première entité (3) pour produire une clé publique de chiffrement (C'') à partir d'au moins ladite valeur de l'élément variable (s) et la clé de chiffrement secrète ($g_1$, $\gamma$), et au moins une occurrence d'une deuxième partie exécutée par une autre entité (4) pour produire le cryptogramme (C') à partir des données à transmettre (K), de la clé publique de chiffrement et d'au moins un nombre (k') tiré aléatoirement à chaque occurrence.

**8.** Système de chiffrement, comprenant:

- une mémoire (15) pour contenir une clé de chiffrement secrète ($g_1$, $\gamma$) d'un schéma de chiffrement admettant plusieurs clés de déchiffrement respectives ({A, B, x}), chaque clé de déchiffrement incorporant un index de clé respectif (x); et

**caractérisé en ce qu'**il comprend:

- un calculateur (13; 13') agencé pour affecter une valeur à au moins un élément variable (s) dans une opération de chiffrement et produire une valeur de masquage (R) à partir d'au moins chaque valeur d'élément variable et la clé de chiffrement secrète, certaines au moins des opérations de chiffrement intégrant une opération de révocation d'au moins une clé de déchiffrement,

dans lequel la clé de chiffrement secrète inclut un élément $g_1$ d'un groupe cyclique $G_1$ d'ordre p et un nombre entier $\gamma$ choisi entre 1 et p-1, où p désigne un nombre premier,

dans lequel la clé de chiffrement secrète est associée à une clé publique w d'un groupe cyclique $G_2$ d'ordre p, de la forme $w = g_2^{\gamma}$, où $g_2$ est un élément du groupe $G_2$,

et dans lequel chaque clé de déchiffrement d'index entier x compris entre 1 et p-1 inclut deux éléments $A = g_1^{1/(\gamma+x)}$ et $B = h_1^{1/(\gamma+x)}$ du groupe $G_1$, $h_1$ étant un élément générateur du groupe $G_1$ tel que $g_1 = h_1^{\alpha}$ avec $\alpha$ exposant entier compris entre 1 et p-1

et le calculateur (13; 13') est commandé, lorsque l'opération de chiffrement intègre une opération de révocation de clé de déchiffrement, pour affecter à un élément variable (s) une valeur fonction de l'index de clé (x') de l'une des clés de déchiffrement ({A', B', x'}), certaines au moins des opérations de révocation incluant en outre une mise à jour d'au moins un paramètre ($h_1$, $h_2$) intervenant dans le calcul de la valeur de masquage (R) pour une prochaine opération de chiffrement, et pour composer un cryptogramme (C') de taille constante comprenant au moins des parties représentatives:

• de l'élément $C_1 = h_1^{1/(\gamma+s)}$ du groupe $G_1$, où s est la valeur affectée à un élément variable, prise comme un entier compris entre 1 et p-1 ;
• de la valeur $C_2 = s$ dudit élément variable;
• d'une valeur $C_5$ dérivée des données à transmettre (K) et d'une valeur de masquage (R) calculée dans un groupe cyclique ($G_T$)

**9.** Système de chiffrement selon la revendication 8, dans lequel le calculateur (13; 13') est en outre agencé pour produire:

• un élément $C_4 = h_2^{1/(\gamma+s)}$ du groupe $G_2$, $h_2$ étant un élément générateur du groupe $G_2$ tel que $g_2 = h_2^{\alpha}$,

dans lequel la valeur de masquage (R) est obtenue en soumettant les éléments $g_1$ et $C_4$ des groupes $G_1$ et $G_2$ à une application bilinéaire,
et dans lequel au moins une opération de révocation inclut, après le calcul de l'élément $C_1$ avec la valeur s dudit élément variable égale à l'index x' de la clé de déchiffrement révoquée, le remplacement de l'élément $h_1$ du groupe $G_1$ par $h_1^{1/(\gamma+x')}$ et, après le calcul de l'élément $C_4$ avec la valeur s dudit élément variable égale à l'index x' de la clé de déchiffrement révoquée, le remplacement de l'élément $h_2$ du groupe $G_2$ par $h_2^{1/(\gamma+x')}$ pour le calcul du cryptogramme dans une prochaine opération de chiffrement.

**10.** Programme d'ordinateur pour un système de chiffrement, le programme comprenant des instructions pour mettre en oeuvre les étapes d'un procédé selon l'une quelconque des revendications 1-3, 5 et 7 lors d'une exécution du programme par une unité de traitement (13; 13') du système de chiffrement.

**11.** Dispositif de traçage pour examiner un décodeur pirate, le dispositif comprenant une interface de communication avec le décodeur pirate, un système de chiffrement selon l'une quelconque des revendications 8 ou 9 agencé pour délivrer au décodeur pirate, à travers l'interface de communication, des cryptogrammes (C') produits dans des opérations de chiffrement successives et des moyens pour observer le comportement du décodeur pirate en réponse aux cryptogrammes successifs, le système de chiffrement (1) étant commandé pour que les opérations de chiffrement successives comprennent des opérations de révocation de clés de déchiffrement allouées à des décodeurs respectifs.

**12.** Dispositif de déchiffrement, comprenant:

- une mémoire (22) pour contenir une clé de déchiffrement ({A, B, x}) d'un schéma de chiffrement admettant plusieurs clés de déchiffrement associées à une même clé de chiffrement secrète ($g_1$, $\gamma$), chaque clé de déchiffrement incorporant un index de clé respectif (x); et

**caractérisé en ce qu'**il comprend:

- un calculateur (21) pour recevoir un cryptogramme (C') généré dans une opération de chiffrement à partir de données à transmettre (K), d'au moins une valeur affectée à au moins un élément variable (s) et de la clé de chiffrement secrète et pour restituer lesdites données à l'aide de la clé de déchiffrement contenue dans ladite mémoire,
dans lequel la clé de chiffrement secrète inclut un élément $g_1$ d'un groupe cyclique $G_1$ d'ordre p et un nombre entier $\gamma$ choisi entre 1 et p-1, où p désigne un nombre premier,
dans lequel la clé de chiffrement secrète est associée à une clé publique w d'un groupe cyclique $G_2$ d'ordre p, de la forme $w = g_2^{\gamma}$, où $g_2$ est un élément du groupe $G_2$,
et dans lequel chaque clé de déchiffrement d'index entier x compris entre 1 et p-1 inclut deux éléments $A = g_1^{1/(\gamma+x)}$ et $B = h_1^{1/(\gamma+x)}$ du groupe $G_1$, $h_1$ étant un élément générateur du groupe $G_1$ tel que $g_1 = h_1^{\alpha}$ avec $\alpha$ exposant entier compris entre 1 et p-1,
et le cryptogramme (C') reçu par le calculateur (21) a une taille constante et comprend au moins des parties représentatives:

- de l'élément $C_1 = h_1^{1/(\gamma+s)}$ du groupe $G_1$, où s est la valeur affectée à un élément variable, prise comme un entier compris entre 1 et p-1 ;
- de la valeur $C_2 = s$ dudit élément variable;
- d'une valeur $C_5$ dérivée des données à transmettre (K) et d'une valeur de masquage (R) calculée dans un groupe cyclique ($G_T$)

et le calculateur est agencé pour mettre à jour au moins un élément (B) de la clé de déchiffrement ({A, B, x}) contenue dans la mémoire (22) après une opération de révocation de clé de déchiffrement intégrée à une opération de chiffrement effectuée en affectant à un élément variable une valeur fonction de l'index de clé (x') de l'une des clés de déchiffrement ({A', B', x'}), la restitution des données et la mise à jour de l'élément (B) de la clé de déchiffrement étant empêchées lorsque l'index de clé en fonction duquel la valeur de l'élément variable est prise dans l'opération de révocation coïncide avec l'index de la clé de déchiffrement contenue dans la mémoire (22).

**13.** Programme d'ordinateur pour un dispositif de déchiffrement (2), le programme comprenant des instructions pour mettre en oeuvre les étapes d'une opération de déchiffrement d'un procédé selon l'une quelconque des revendications 3, 4 et 6 lors d'une exécution du programme par une unité de traitement (21) du dispositif.

**Patentansprüche**

**1.** Kryptografisches Verfahren, wobei eine erste Einheit (1; 3) über einen geheimen Verschlüsselungsschlüssel ($g_1$, $\gamma$) eines Verschlüsselungsschemas verfügt, das mehrere Entschlüsselungsschlüssel zulässt, und mehrere Empfangseinheiten (2) über jeweilige Entschlüsselungsschlüssel ({A, B, x}) verfügen, wobei jeder Entschlüsselungsschlüssel einen jeweiligen Schlüsselindex (x) enthält, wobei das Verfahren eine Verschlüsselungsoperation umfasst, umfassend die folgenden Schritte:

- Versehen eines Werts mit mindestens einem variablen Element (s); und

**dadurch gekennzeichnet, dass** dieses die Schritte umfasst:

- Berechnen eines Kryptogramms (C') aus zu übertragenden Daten (K), aus mindestens jedem Wert mit einem variablen Element (s) und aus dem geheimen Verschlüsselungsschlüssel, wobei das Kryptogramm (C') eine Größe aufweist, die konstant ist und von der Anzahl von Empfangseinheiten (2) unabhängig ist, und mindestens Abschnitte umfasst, die repräsentativ sind für:

• das Element $C_1 = h_1^{1/(\gamma+s)}$ der Gruppe $G_1$, wobei s der Wert ist, der mit einem variablen Element versehen ist, herangezogen als ganze Zahl zwischen 1 und p-1;
• den Wert $C_2 = s$ des variablen Elements;
• einen Wert $C_5$, der von zu übertragenden Daten (K) abgeleitet ist, und einen Maskierungswert (R), der in einer cyclischen Gruppe (GT) berechnet wird,

wobei das Verfahren außerdem eine Aufhebungsoperation mindestens eines Entschlüsselungsschlüssels umfasst, welche in einer Verschlüsselungsoperation integriert ist, die durchgeführt wird, indem mit einem variablen Element (s) ein Wert als Funktion des Schlüsselindexes (x') eines der Entschlüsselungsschlüssel ({A', B', x'}) versehen wird, wobei mindestens bestimmte Aufhebungsoperationen außerdem eine Aktualisierung mindestens eines Parameters (h1, h2) umfassen, der bei der Berechnung des Kryptogramms (C') für eine nächste Verschlüsselungsoperation verwendet wird, wobei der geheime Verschlüsselungsschlüssel ein Element $g_1$ einer zyklischen Gruppe $G_1$ der Ordnung p und eine ganze Zahl $\gamma$, ausgewählt zwischen 1 und p-1, aufweist, wobei p eine Primzahl bezeichnet, wobei der geheime Verschlüsselungsschlüssel mit einem öffentlichen Schlüssel w einer zyklischen Gruppe $G_2$ der Ordnung p mit der Form $w = g_2^{\gamma}$ assoziiert ist, wobei $g_2$ ein Element der Gruppe $G_2$ ist, und wobei jeder Entschlüsselungsschlüssel des ganzzahligen Indexes x zwischen 1 und p-1 zwei Elemente $A = g_1^{1/(\gamma+x)}$ und $B = h_1^{1/(\gamma+x)}$ der Gruppe $G_1$ aufweist, wobei $h_1$ ein erzeugendes Element der Gruppe $G_1$ ist, wie $g_1 = h_1^{\alpha}$, wobei $\alpha$ ein ganzzahliger Exponent zwischen 1 und p-1 ist.

**2.** Kryptografisches Verfahren nach Anspruch 1, wobei in allen N Verschlüsselungsoperationen die Verschlüsselungsoperation eine Aufhebungsoperation des Entschlüsselungsschlüssels umfasst, wobei N eine ganze Zahl größer oder gleich 1 ist.

**3.** Kryptografisches Verfahren nach einem der vorhergehenden Ansprüche, umfassend außerdem eine Entschlüsselungsoperation des Kryptogramms (C'), um die zu übertragenden Daten (K) auf der Ebene einer Empfangseinheit (2) wiederherzustellen, wobei die Entschlüsselungsoperation verhindert wird, wenn der Entschlüsselungsschlüssel ({A', B', x'}) der Empfangseinheit in einer Verschlüsselungsoperation aufgehoben wird.

**4.** Kryptografisches Verfahren nach Anspruch 3, wobei, nach einer Aufhebungsoperation, eine Entschlüsselungsoperation außerdem eine Aktualisierung mindestens eines Elements (B) des Entschlüsselungsschlüssels ({A, B, x}) der Empfangseinheit (2) umfasst.

**5.** Kryptografisches Verfahren nach einem der vorhergehenden Ansprüche, wobei das Kryptogramm (C') außerdem Abschnitte umfasst, die repräsentativ sind für:

• das Element $C_3 = w^k$ der Gruppe $G_2$, wobei k eine ganze Zahl zwischen 1 und p-1 bezeichnet;
• das Element $C_4 = h_2^{k/(\gamma+s)}$ der Gruppe $G_2$, wobei $h_2$ ein erzeugendes Element der Gruppe $G_2$ ist, wie $g_2 = h_2^{\alpha}$; und

der Maskierungswert (R) erhalten wird, indem die Elemente $g_1$ und $C_4$ der Gruppen $G_1$ und $G_2$ einer bilinearen Anwendung unterzogen werden, und wobei mindestens eine Aufhebungsoperation, nach der Berechnung des Elements $C_1$ mit dem Wert s des variablen Elements gleich dem Index x' des aufgehobenen Entschlüsselungsschlüssels, das Ersetzen des Elements $h_1$ der Gruppe $G_1$ durch $h_1^{1/(\gamma+x')}$, und, nach der Berechnung des Elements $C_4$ mit dem Wert s des variablen Elements gleich dem Index x' des aufgehobenen Entschlüsselungsschlüssels, das Ersetzen des Elements $h_2$ der Gruppe $G_2$ durch $h_2^{1/(\gamma+x')}$ für die Berechnung des Kryptogramms in einer nächsten Verschlüsselungsoperation umfasst.

**6.** Kryptografisches Verfahren nach Anspruch 5, umfassend außerdem eine Entschlüsselungsoperation des Kryptogramms (C') zur Wiederherstellung der zu übertragenden Daten (K) auf der Ebene einer Empfangseinheit (2) mit einem Entschlüsselungsschlüssel {A, B, x}, wobei die Entschlüsselungsoperation die Berechnung eines Elements $Y = (C_1/B)^{1/(x-C_2)}$ der Gruppe $G_1$, die Berechnung eines ersten Werts, indem die Elemente Y und $C_3$ der Gruppen $G_1$ und $G_2$ der bilinearen Anwendung unterzogen werden, die Berechnung eines zweiten Werts, indem die Elemente $A^x$ und $C_4$ der Gruppen $G_1$ und $G_2$ der bilinearen Anwendung unterzogen werden, die Berechnung eines dritten Werts, der für den Maskierungswert repräsentativ ist, gleich dem Produkt des ersten und zweiten Werts, und die Wiederherstellung der zu übertragenden Daten (K) aus dem Wert $C_5$ und aus dem dritten Wert umfasst, und wobei mindestens eine Entschlüsselungsoperation außerdem, nach einer Wiederherstellungsoperation, das Ersetzen des Elements B des Entschlüsselungsschlüssels {A, B, x} der Empfangseinheit (2) durch das Element Y umfasst, das während der Entschlüsselungsoperation berechnet wird.

7. Kryptografisches Verfahren nach einem der vorhergehenden Ansprüche,
wobei die Berechnung des Kryptogramms (C') in der Verschlüsselungsoperation einen ersten Abschnitt, der von der ersten Einheit (3) ausgeführt wird, um einen öffentlichen Verschlüsselungsschlüssel (C") mindestens aus dem Wert mit dem variablen Element (s) und dem geheimen Verschlüsselungsschlüssel ($g_1$, $\gamma$) zu erzeugen, und mindestens ein Auftreten eines zweiten Abschnitts, der durch eine andere Einheit (4) ausgeführt wird, um das Kryptogramm (C') aus den zu übertragenden Daten (K), aus dem öffentlichen Verschlüsselungsschlüssel und mindestens einer Zahl (k'), die bei jedem Auftreten aleatorisch gezogen wird, umfasst.

8. Verschlüsselungssystem, umfassend:

einen Speicher (15), um einen geheimen Verschlüsselungsschlüssel ($g_1$, $\gamma$) eines Verschlüsselungsschemas zu enthalten, das mehrere jeweilige Entschlüsselungsschlüssel ({A, B, x}) zulässt, wobei jeder Entschlüsselungsschlüssel einen jeweiligen Schlüsselindex (x) enthält; und **dadurch gekennzeichnet, dass** dieses umfasst:

- einen Rechner (13; 13'), der eingerichtet ist, einen Wert mit mindestens einem variablen Element (s) in einer Verschlüsselungsoperation zu versehen und einen Maskierungswert (R) aus mindestens jedem Wert mit einem variablen Element und dem geheimen Verschlüsselungsschlüssel zu erzeugen, wobei mindestens bestimmte der Verschlüsselungsoperationen eine Aufhebungsoperation mindestens eines Entschlüsselungsschlüssels enthalten,
wobei der geheime Verschlüsselungsschlüssel ein Element $g_1$ einer zyklischen Gruppe $G_1$ der Ordnung p und eine ganze Zahl $\gamma$, ausgewählt zwischen 1 und p-1, aufweist, wobei p eine Primzahl bezeichnet, wobei der geheime Verschlüsselungsschlüssel mit einem öffentlichen Schlüssel w einer zyklischen Gruppe $G_2$ der Ordnung p mit der Form $w = g_2^{\gamma}$ assoziiert ist, wobei $g_2$ ein Element der Gruppe $G_2$ ist, und wobei jeder Entschlüsselungsschlüssel des ganzzahligen Indexes x zwischen 1 und p-1 zwei Elemente $A = g_1^{1/(\gamma+x)}$ und $B = h_1^{1/(\gamma+x)}$ der Gruppe $G_1$ aufweist, wobei $h_1$ ein erzeugendes Element der Gruppe $G_1$ ist, wie $g_1 = h_1^{\alpha}$, wobei $\alpha$ ein ganzzahliger Exponent zwischen 1 und p-1 ist, und wobei der Rechner (13; 13') gesteuert wird, wenn die Verschlüsselungsoperation eine Wiederherstellungsoperation des Entschlüsselungsschlüssels enthält, um mit einem variablen Element (s) einen Wert als Funktion des Schlüsselindexes (x') eines der Entschlüsselungsschlüssel ({A', B', x'}) zu versehen, wobei mindestens bestimmte Aufhebungsoperationen außerdem eine Aktualisierung mindestens eines Parameters ($h_1$, $h_2$) umfassen, der bei der Berechnung des Maskierungswerts (R) für eine nächste Verschlüsselungsoperation verwendet wird, und um ein Kryptogramm (C') mit konstanter Größe zusammenzustellen, umfassend mindestens Abschnitte, die repräsentativ sind für:

• das Element $C_1 = h_1^{1/(\gamma+s)}$ der Gruppe $G_1$, wobei s der Wert ist, der mit einem variablen Element versehen ist, herangezogen als ganze Zahl zwischen 1 und p-1;
• den Wert $C_2 = s$ des variablen Elements;
• einen Wert $C_5$, der von zu übertragenden Daten (K) abgeleitet ist, und einen Maskierungswert (R), der in einer cyclischen Gruppe ($G_T$) berechnet wird.

9. Verschlüsselungssystem nach Anspruch 8,
wobei der Rechner (13; 13') außerdem eingerichtet ist zu erzeugen:

• ein Element $C_4 = h_2^{k/(\gamma+s)}$ der Gruppe $G_2$, wobei $h_2$ ein erzeugendes Element der Gruppe $G_2$ ist, wie $g_2 = h_2^{\alpha}$;

wobei der Maskierungswert (R) erhalten wird, indem die Elemente $g_1$ und $C_4$ der Gruppen $G_1$ und $G_2$ einer bilinearen Anwendung unterzogen werden, und wobei mindestens eine Aufhebungsoperation, nach der Berechnung des Elements $C_1$ mit dem Wert s des variablen Elements gleich dem Index x' des aufgehobenen Entschlüsselungsschlüssels, das Ersetzen des Elements $h_1$ der Gruppe $G_1$ durch $h_1^{1/(\gamma+x')}$, und, nach der Berechnung des Elements

$C_4$ mit dem Wert s des variablen Elements gleich dem Index x' des aufgehobenen Entschlüsselungsschlüssels, das Ersetzen des Elements $h_2$ der Gruppe $G_2$ durch $h_2^{1/(\gamma+x')}$ für die Berechnung des Kryptogramms in einer nächsten Verschlüsselungsoperation umfasst.

10. Computerprogramm für ein Verschlüsselungssystem, wobei das Programm Instruktionen umfasst, um die Schritte eines Verfahrens nach einem der Ansprüche 1 bis 3, 5 und 7 bei einer Ausführung des Programms durch eine Behandlungseinheit (13; 13') des Verschlüsselungssystems durchzuführen.

11. Verfolgungssystem zur Untersuchung eines Piraten-Decoders, wobei die Vorrichtung umfasst: eine Kommunikationsschnittstelle mit dem Piraten-Decoder, ein Verschlüsselungssystem nach einem der Ansprüche 8 oder 9, das eingerichtet ist, dem Piraten-Decoder, durch die Kommunikationsschnittstelle, Kryptogramme (C') zu liefern, die in aufeinanderfolgenden Verschlüsselungsoperationen erzeugt werden, und Mittel zum Beobachten des Verhaltens des Piraten-Decoders ansprechend auf aufeinanderfolgende Kryptogramme, wobei das Verschlüsselungssystem (1) gesteuert wird, damit die aufeinanderfolgenden Verschlüsselungsoperationen Aufhebungsoperationen von Entschlüsselungsschlüsseln umfassen, die den jeweiligen Decodern zugeordnet sind.

12. Entschlüsselungsvorrichtung, umfassend:

einen Speicher (22), um einen Entschlüsselungsschlüssel ({A, B, x}) eines Verschlüsselungsschlüssels zu enthalten, das mehrere Entschlüsselungsschlüssel zulässt, die mit demselben geheimen Verschlüsselungsschlüssel ($g_1$, $\gamma$) assoziiert sind, wobei jeder Entschlüsselungsschlüssel einen jeweiligen Schlüsselindex (x) enthält; und

**dadurch gekennzeichnet, dass** diese umfasst:

einen Rechner (21), um ein Kryptogramm (C') zu empfangen, das in einer Verschlüsselungsoperation aus zu übertragenden Daten (K), aus mindestens einem Wert, der mit einem variablen Element (s) versehen ist, und aus dem geheimen Verschlüsselungsschlüssel generiert wird, und um die Daten mit Hilfe des Entschlüsselungsschlüssels, der in dem Speicher enthalten ist, wiederherzustellen, wobei der geheime Verschlüsselungsschlüssel ein Element $g_1$ einer zyklischen Gruppe $G_1$ der Ordnung p und eine ganze Zahl $\gamma$, ausgewählt zwischen 1 und p-1, aufweist, wobei p eine Primzahl bezeichnet, wobei der geheime Verschlüsselungsschlüssel mit einem öffentlichen Schlüssel w einer zyklischen Gruppe $G_2$ der Ordnung p mit der Form $w = g_2^{\gamma}$ assoziiert ist, wobei $g_2$ ein Element der Gruppe $G_2$ ist, und wobei jeder Entschlüsselungsschlüssel des ganzzahligen Indexes x zwischen 1 und p-1 zwei Elemente $A = g_1^{1/(\gamma+x)}$ und $B = h_1^{1/(\gamma+x)}$ der Gruppe $G_1$ aufweist, wobei $h_1$ ein erzeugendes Element der Gruppe $G_1$ ist, wie $g_1 = h_1^{\alpha}$, wobei $\alpha$ ein ganzzahliger Exponent zwischen 1 und p-1 ist, und wobei das Kryptogramm (C'), das von dem Rechner (21) empfangen wird, eine konstante Größe aufweist und mindestens die Abschnitte umfasst,

die repräsentativ sind für:

• das Element $C_1 = h_1^{1/(\gamma+s)}$ der Gruppe $G_1$, wobei s der Wert ist, der mit einem variablen Element versehen ist, herangezogen als ganze Zahl zwischen 1 und p-1;

• den Wert $C_2 = s$ des variablen Elements;

• einen Wert $C_5$, der von zu übertragenden Daten (K) abgeleitet ist, und einen Maskierungswert (R), der in einer cyclischen Gruppe ($G_T$) berechnet wird, und wobei der Rechner eingerichtet ist, mindestens ein Element (B) des Entschlüsselungsschlüssels ({A, B, x}) zu aktualisieren, der in dem Speicher (22) enthalten ist, nach einer Aufhebungsoperation des Entschlüsselungsschlüssels, welche in einer Verschlüsselungsoperation enthalten ist, die durchgeführt wird, indem mit einem variablen Element ein Wert als Funktion des Schlüsselindexes (x') eines der Entschlüsselungsschlüssel ({A', B', x'}) versehen wird, wobei die Wiederherstellung der Daten und die Aktualisierung des Elements (B) des Entschlüsselungsschlüssels verhindert werden, wenn der Schlüsselindex, als Funktion dessen der Wert des variablen Elements in der Wiederherstellungsoperation herangezogen wird, mit dem Index des Entschlüsselungsschlüssels, der in dem Speicher (22) enthalten ist, zusammenfällt.

13. Computerprogramm für eine Entschlüsselungsvorrichtung (2), wobei das Programm Instruktionen umfasst, um die Schritte einer Entschlüsselungsoperation eines Verfahrens nach einem der Ansprüche 3, 4 und 6 bei der Ausführung des Programms durch eine Behandlungseinheit (21) der Vorrichtung durchzuführen.

**Claims**

1. Cryptographic method, wherein a first entity (1; 3) has a secret encryption key ($g_1$, $\gamma$) of an encryption scheme accepting several decryption keys, and several receiving entities (2) have respective decryption keys ({A, B, x}), each decryption key incorporating a respective key index (x), the method comprising an encryption operation comprising the following steps:

   - assigning a value to at least one variable element (s); and

   **characterized in that** it comprises the steps of:

   - computing a cryptogram (C') from data to be transmitted (K), from at least each value of a variable element (s), and from the secret encryption key, wherein the cryptogram (C') has a size that is constant and independent of the number of receiving entities (2), and comprises at least portions representative:

      • of the element $C_1 = h_1^{1/(\gamma+s)}$ of the group $G_1$, where s is the value assigned to a variable element, taken as an integer lying between 1 and p-1;
      • of the value $C_2 = s$ of said variable element;
      • of a value $C_5$ derived from the data to be transmitted (K) and from a masking value (R) computed in a cyclical group (GT)

   the method also comprising an operation of revocation of at least one decryption key incorporated in an encryption operation carried out by assigning to a variable element (s) a value that is a function of the key index (x') of one of the decryption keys ({A', B', x'}), at least certain of the revocation operations also including an update of at least one parameter ($h_1$, $h_2$) involved in the computation of the cryptogram (C') for a subsequent encryption operation, wherein the secret encryption key includes an element $g_1$ of a cyclical group $G_1$ of order p and a whole number $\gamma$ chosen between 1 and p-1, where p is a prime number, wherein the secret encryption key is associated with a public key w of a cyclical group $G_2$ of order p, in the form $w = g_2^\gamma$, where $g_2$ is an element of the group $G_2$, and wherein each decryption key with an integer index x lying between 1 and p-1 includes two elements $A = g_1^{1/(\gamma+x)}$ and $B = h_1^{1/(\gamma+x)}$ of the

   group $G_1$, $h_1$ being a generating element of the group $G_1$ such that $g_1 = h_1^\alpha$ where $\alpha$ is an integer exponent lying between 1 and p-1.

2. Cryptographic method according to Claim 1, wherein, every N encryption operations, the encryption operation includes one decryption key revocation operation, N being an integer greater than or equal to 1.

3. Cryptographic method according to either one of the preceding claims, also comprising an operation of decryption of the cryptogram (C') in order to recover the data to be transmitted (K) at a receiving entity (2), the decryption operation being prevented when the decryption key ({A', B', x'}) of said receiving entity is revoked in an encryption operation.

4. Cryptographic method according to Claim 3, wherein, after a revocation operation, a decryption operation also includes an update of at least one element (B) of the decryption key ({A, B, x}) of the receiving entity (2).

5. Cryptographic method according to one of the preceding claims, wherein the cryptogram (C') further comprises portions representative:

      • of the element $C_3 = w^k$ of the group $G_2$, where k is a whole number lying between 1 and p-1;
      • of the element $C_4 = h_2^{k/(\gamma+s)}$ of the group $G_2$, $h_2$ being a generating element of the group $G_2$ such that $g_2 = h_2^\alpha$; and

   the masking value (R) is obtained by subjecting the elements $g_1$ and $C_4$ of the groups $G_1$ and $G_2$ to a bilinear application, and wherein at least one revocation operation includes, after the computation of the element $C_1$ where the value s of said variable element equals the index x' of the revoked decryption key, the replacement of the element $h_1$ of the group $G_1$ by $h_1^{1/(\gamma+x')}$ and, after the computation of the element $C_4$ where the value s of said variable element equals the index x' of the revoked decryption key, the replacement of the element $h_2$ of the group $G_2$ by $h_2^{1/(\gamma+x')}$ for the computation of the cryptogram in a subsequent encryption operation.

6. Cryptographic method according to Claim 5, also comprising an operation of decryption of the cryptogram (C') in order to recover the data to be transmitted (K) at a receiving entity (2) having a decryption key {A, B, x}, the decryption operation including the computation of an element $Y = (C_1/B)^{1/(x-C_2)}$ of the group $G_1$, the computation of a first value by subjecting the elements Y and $C_3$ of the groups $G_1$ and $G_2$ to the bilinear application, the computation of a second value by subjecting the elements $A^x$ and $C_4$

of the groups $G_1$ and $G_2$ to the bilinear application, the computation of a third value, representative of the masking value, equal to the product of said first and second values, and the recovery of the data to be transmitted (K) from the value $C_5$ and from said third value, and wherein at least one decryption operation also comprises, after a revocation operation, the replacement of the element B of the decryption key {A, B, x} of the receiving entity (2) by said element Y computed during said decryption operation.

7. Cryptographic method according to any one of the preceding claims, wherein the computation of the cryptogram (C') in the encryption operation comprises a first portion executed by the first entity (3) in order to produce a public encryption key (C") from at least said value of the variable element (s) and the secret encryption key ($g_1$, $\gamma$), and at least one occurrence of a second portion executed by another entity (4) in order to produce the cryptogram (C') from the data to be transmitted (K), the public encryption key and at least a number (k') drawn randomly on each occurrence.

8. Encryption system comprising:

- a memory (15) in order to contain a secret encryption key ($g_1$, $\gamma$) of an encryption scheme accepting several respective decryption keys ({A, B, x}), each decryption key incorporating a respective key index (x); and

**characterized in that** it comprises:

- a computer (13; 13') arranged to assign a value to at least one variable element (s) in an encryption operation and to produce a masking value (R) from at least each variable element value and the secret encryption key, at least certain of the encryption operations incorporating an operation to revoke at least one decryption key,

wherein the secret encryption key includes an element $g_1$ of a cyclical group $G_1$ of order p and a whole number $\gamma$ chosen between 1 and p-1, where p is a prime number, wherein the secret encryption key is associated with a public key w of a cyclical group $G_2$ of order p, in the form $w = g_2{}^\gamma$, where $g_2$ is an element of the group $G_2$, and wherein each decryption key of integer index x lying between 1 and p-1 includes two elements $A = g_1{}^{1/(\gamma+x)}$ and $B = h_1{}^{1/(\gamma+x)}$ of the group $G_1$, $h_1$ being a generating element of the group $G_1$ such that $g_1 = h_1{}^\alpha$ where $\alpha$ is an integer exponent lying between 1 and p-1 and the computer (13; 13') is controlled, when the encryption operation includes an operation to revoke a decryption key, in order to assign to a variable element (s) a value that is a function of the key index (x') of one of the decryption keys ({A', B', x'}), at least certain of the revocation operations also including an update of at least one parameter ($h_1$, $h_2$) involved in the computation of the masking value (R) for a subsequent encryption operation, and to compose a constant-size cryptogram (C') comprising at least portions representative:

• of the element $C_1 = h_1{}^{1/(\gamma+s)}$ of the group $G_1$, where s is the value assigned to a variable element, taken as an integer lying between 1 and p-1;
• of the value $C_2 = s$ of said variable element;
• of a value $C_5$ derived from the data to be transmitted (K) and from a masking value (R) computed in a cyclical group ($G_T$).

9. Encryption system according to Claim 8, wherein the computer (13; 13') is also arranged in order to produce:

• an element $C_4 = h_2{}^{k/(\gamma+s)}$ of the group $G_2$, $h_2$ being a generating element of the group $G_2$ such that $g_2 = h_2{}^\alpha$,

wherein the masking value (R) is obtained by subjecting the elements $g_1$ and $C_4$ of the groups $G_1$ and $G_2$ to a bilinear application, and wherein at least one revocation operation includes, after the computation of the element $C_1$ where the value s of said variable element equals the index x' of the revoked decryption key, the replacement of the element $h_1$ of the group $G_1$ by $h_1{}^{1/(\gamma+x')}$ and, after the computation of the element $C_4$ where the value s of said variable element equals the index x' of the revoked decryption key, the replacement of the element $h_2$ of the group $G_2$ by $h_2{}^{1/(\gamma+x')}$ for the computation of the cryptogram in a subsequent encryption operation.

10. Computer program for an encryption system, the program comprising instructions in order to use the steps of a method according to any one of Claims 1-3, 5 and 7 during an execution of the program by a processor unit (13; 13') of the encryption system.

11. Tracing device in order to examine a pirate decoder, the device comprising an interface for communication with the pirate decoder, an encryption system according to either one of Claims 8 and 9 arranged to deliver to the pirate decoder, through the communication interface, cryptograms (C') produced in successive encryption operations and means for observing the behavior of the pirate decoder in response to the successive cryptograms, the encryption system (1) being commanded in order that the successive encryption operations comprise operations of revocation of the decryption keys allocated to respective decoders.

**12.** Decryption device, comprising:

    - a memory (22) in order to contain a decryption key ($\{A, B, x\}$) of an encryption scheme accepting several decryption keys associated with one and the same secret encryption key ($g_1, \gamma$), each decryption key incorporating a respective key index (x); and

**characterized in that** it comprises:

    - a computer (21) in order to receive a cryptogram (C') generated in an encryption operation from data to be transmitted (K), from at least one value assigned to at least one variable element (s) and from the secret encryption key and in order to restore said data with the aid of the decryption key contained in said memory, wherein the secret encryption key includes an element $g_1$ of a cyclical group $G_1$ of order p and a whole number $\gamma$ chosen between 1 and p-1, where p is a prime number, wherein the secret encryption key is associated with a public key w of a cyclical group $G_2$ of order p, in the form $w = g_2{}^\gamma$, where $g_2$ is an element of the group $G_2$,
and wherein each decryption key of integer index x lying between 1 and p-1 includes two elements $A = g_1{}^{1/(\gamma+x)}$ and $B = h_1{}^{1/(\gamma+x)}$ of the group $G_1$, $h_1$ being a generating element of the group $G_1$ such that $g_1 = h_1{}^\alpha$ where $\alpha$ is an integer exponent lying between 1 and p-1,
and the cryptogram (C') received by the computer (21) has a constant size and comprises at least portions representative:

    • of the element $C_1 = h_1{}^{1/(\gamma+s)}$ of the group $G_1$, where s is the value assigned to a variable element, taken as an integer lying between 1 and p-1;
    • of the value $C_2 = s$ of said variable element;
    • of a value $C_5$ derived from the data to be transmitted (K) and from a masking value (R) computed in a cyclical group ($G_T$) and the computer is arranged to update at least one element (B) of the decryption key ($\{A, B, x\}$) contained in the memory (22) after an operation of revocation of the decryption key incorporated in an encryption operation carried out by assigning to a variable element a value that is a function of the index of the key (x') of one of the decryption keys ($\{A', B', x'\}$), the restitution of the data and the updating of the element (B) of the decryption key being prevented when the index of the key as a function of which the value of the variable element is taken in the revocation operation coincides with the index of the decryption key contained in the memory (22).

**13.** Computer program for a decryption device (2), the program comprising instructions in order to use the steps of a decryption operation of a method according to any one of Claims 3, 4 and 6 during an execution of the program by a processor unit (21) of the device.

**FIG. 1**

**FIG. 2**

$101$ — $s \leftarrow x'$

OUI — RÉVOCATION ? — NON — $100$

TIRER s — $102$

$103$ — $C_1 \leftarrow h_1^{1/(\gamma+s)}$

$104$ — $C_2 \leftarrow s$

$105$ — TIRER k

$106$ — $C_3 \leftarrow w^k$

**FIG. 3**

$107$ — $Q \leftarrow h_2^{1/(\gamma+s)}$

$108$ — $C_4 \leftarrow Q^k$

$109$ — $R \leftarrow e\,(g_1, C_4)$

$110$ — $C_5 \leftarrow D(K,R)$

$111$ — $C' \leftarrow \{C_1, C_2, C_3, C_4, C_5\}$

OUI — RÉVOCATION ? — NON

$112$

$113$ — $h_1 \leftarrow C_1$ \
$h_2 \leftarrow Q$

$200$ — $\{C_1, C_2, C_3, C_4, C_5\} \leftarrow C'$

$201$ — $Y \leftarrow (C_1/B)^{1/(x-C_2)}$

$202$ — $Z \leftarrow e(Y, C_3) \cdot e(A^X, C_4)$

**FIG. 4**

$203$ — $K \leftarrow D^{-1}(C_5, Z)$

OUI — RÉVOCATION ? — NON

$204$

$205$ — $B \leftarrow Y$

$101$ — $\boxed{s \leftarrow x'}$

$\boxed{\text{RÉVOCATION ?}}$   OUI   NON

$100$

$102$ — $\boxed{\text{TIRER } s}$

$103$ — $\boxed{C_1 \leftarrow h_1{}^{1/(\gamma+s)}}$

$104$ — $\boxed{C_2 \leftarrow s}$

**FIG. 5**

$109$ — $\boxed{R \leftarrow e\,(g_1, C_1)}$

$110$ — $\boxed{C_5 \leftarrow D(K,R)}$

$111'$ — $\boxed{C' \leftarrow (C_1, C_2, C_5)}$

$113$ — $\boxed{h_1 \leftarrow C_1}$

$200'$ — $\boxed{\{C_1, C_2, C_5\} \leftarrow C'}$

$201$ — $\boxed{Y \leftarrow (C_1/B)^{1/(x-C_2)}}$

$202$ — $\boxed{Z \leftarrow e(Y,w)\,.\,e(A^x, C_1)}$     **FIG. 6**

$203$ — $\boxed{K \leftarrow D^{-1}(C_5, Z)}$

$205$ — $\boxed{B \leftarrow Y}$

FIG. 7A

FIG. 7B

FIG. 8A

FIG. 8B

$300$ — $\{C_1, C_2, T, U, R\} \leftarrow C''$

$301$ — TIRER $k'$

$302$ — $C_3 \leftarrow T^{k'}$

$303$ — $C_4 \leftarrow U^{k'}$

$304$ — $C_5 \leftarrow D(K, R^{k'})$

$305$ — $C' \leftarrow (C_3, C_4, C_5)$

**EP 2 022 207 B1**

**RÉFÉRENCES CITÉES DANS LA DESCRIPTION**

**Littérature non-brevet citée dans la description**

- **D. BONEH ; A. SAHAI ; B. WATERS.** Fully Collusion Résistant Traitor Tracing With Short Ciphertexts and Private Keys. *Cryptology ePrint, http://eprint.ia-cr.org/2006/045.pdf*

- **WEN-GUEY TZENG ; ZHI-JIA TZENG.** A public-key traitor tracing scheme with revocation using dynamic shares. *PKC,* 2001
- **NAOR et al.** Revocation and Tracing Schemes for Stateless Receivers. *Crypto,* 2001